# FASCICULE DE BREVET EUROPEEN

(11) **EP 1 702 693 B1**
(45) Date de publication et mention de la délivrance du brevet: **28.11.2007**
(21) Numéro de dépôt: 06356022.1
(22) Date de dépôt: 09.03.2006
(51) Int. Cl.: B21D 39/02, B23B 31/12

(54) **Mandrin porte-outil pour l'équipement d'une machine tournante**
Werkzeugspannfutter für eine drehende Maschine
Tool chuck for a rotating machine

(30) Priorité: 16.03.2005 FR 0502586
(43) Date de publication de la demande: 20.09.2006
(73) Titulaire: ETABLISSEMENTS AMYOT S.A., F-25300 Pontarlier (FR)
(72) Inventeur: Cachod, Yves, 25270 Levier (FR)
(74) Mandataire: Maureau, Philippe

(56) Documents cités:
- EP-A- 0 335 593
- DE-U1- 29 813 714
- GB-A- 2 356 368
- US-A- 5 934 690
- US-A- 6 073 939
- US-A1- 2003 042 692
- US-A1- 2003 141 676
- US-A1- 2004 202 518
- US-A1- 2004 227 309

## Description

La présente invention concerne un mandrin porte-outil pour l'équipement d'une machine tournante tel que défini dans le préambule de la revendication 1. Un tel mandrin est connu du document EP-A-0335593. Un mandrin monté sur l'arbre d'une machine tournante vise à réaliser la fixation d'un outil, tel qu'un foret s'il s'agit d'un outil de perçage. La fixation de l'outil sur le mandrin est réalisée par l'intermédiaire de trois mors montés coulissants dans des cavités ménagées dans le corps du mandrin. Pour assurer un bon guidage des mors, les cavités possèdent une section de forme générale circulaire, et sont convergentes vers l'avant, de telle sorte que le déplacement axial des mors vers l'avant se traduit par un rapprochement de ceux-ci en vue de réaliser le serrage de l'outil, tandis que le déplacement vers l'arrière des mors s'accompagne d'un desserrage de l'outil. Les mors possèdent une partie filetée, intérieurement ou extérieurement, pouvant être entraînée en rotation soit par un insert central fileté, soit par un écrou périphérique qui est entraîné par une chemise.

Un mandrin est réalisé en acier, et l'obtention de sa structure finale nécessite de nombreux usinages qui sont très coûteux De même, la réalisation des mors nécessite elle aussi des usinages qui augmentent le prix de revient du mandrin.

Le but de l'invention est de fournir un mandrin de prix de revient réduit, qui offre néanmoins les mêmes fonctionnalités et les mêmes performances que les mandrins réalisés traditionnellement.

A cet effet, le mandrin qu'elle concerne, tel que défini dans la revendication 1, est du type comportant un corps à l'intérieur duquel sont montés, guidés en translation, plusieurs mors qui convergent vers l'avant pour réaliser le serrage d'un outil, le corps étant réalisé à partir d'au moins une tôle plate découpée, pliée et/ou emboutie pour former des gorges tournées vers l'intérieur, pour le guidage des mors, et refermée sur elle-même pour former un corps tubulaire servant au montage des mors et d'autres éléments, notamment d'entraînement des mors.

Il résulte de la structure de ce mandrin qu'il est obtenu de façon simple et économique, puisqu'il est réalisé à partir d'au moins une tôle plate découpée, pliée et mise en forme avant d'être refermée sur elle-même pour former un corps tubulaire.

Les revendications dépendantes décrivent des réalisations avantageuses de l'invention.

Suivant une première possibilité, ce mandrin est réalisé à partir d'une pièce obtenue par découpage d'une tôle plate et comportant un anneau central destiné à former l'extrémité avant du mandrin, à partir duquel s'étendent trois ailes dans chacune desquelles est réalisée par pliage ou emboutissage une gorge orientée vers le centre de l'anneau et servant au guidage d'un mors, les ailes étant rabattues d'un même côté de l'anneau et fixées chacune sur les deux autres ailes, pour former un corps tubulaire.

Avantageusement, la fixation de chaque aile sur une aile voisine est réalisée par sertissage dans la partie arrière du corps.

Suivant une autre possibilité, le corps est réalisé à partir de trois tôles plates découpées, pliées et/ou embouties, délimitant chacune une gorge pour le guidage d'un mors, et soudées les unes sur les autres pour former un corps tubulaire servant au montage des mors et d'autres éléments, notamment d'entraînement des mors.

En outre, les trois tôles mises en forme se recouvrent partiellement deux à deux et chaque tôle comporte deux ailes avant et deux ailes arrières de largeurs différentes disposées de part et d'autre d'une partie centrale dans laquelle est destinée à être ménagée une gorge, l'aile avant la plus large et l'aile arrière la plus large étant situées de part et d'autre de la partie centrale, chacune de ces deux ailes avant et arrières étant destinée à venir en recouvrement des ailes avant et arrière des deux tôles situées de part et d'autre de la tôle considérée, tandis que les deux ailes les moins larges de cette tôle sont au moins pour partie recouvertes par les ailes des deux tôles adjacentes.

Ce recouvrement inversé des ailes avant et arrière d'une tôle, par rapport aux ailes avant et arrière des tôles voisines, favorise la rigidité du corps obtenu à partir de ces tôles.

Avantageusement, et afin d'améliorer encore la rigidité du corps, les ailes plus larges avant et arrières d'une même tôle sont décalées latéralement l'une par rapport à l'autre, de telle sorte que l'aile arrière d'une tôle vienne en appui contre la paroi extérieure d'une gorge formée par une tôle voisine et que l'aile avant de la tôle vienne en appui contre la paroi extérieure d'une gorge formée par l'autre tôle voisine.

Suivant une forme d'exécution, ce mandrin comporte une tête centrale filetée coopérant avec une denture intérieure de chacun des mors. Dans ce cas, les zones du corps comprises entre les gorges de guidage des mors, délimitent une enveloppe cylindrique servant au logement de !a tête centrale.

Selon une forme d'exécution de ce mandrin, la tête centrale comporte une gorge annulaire et le corps comporte au moins une patte, déformable vers l'intérieur, pour s'engager dans la gorge de la tête, afin d'assurer la retenue axiale de celle-ci, tout en permettant sa rotation.

Selon une autre forme d'exécution de ce mandrin, l'extrémité postérieure du corps est équipée d'une bague de serrage métallique qui, disposée dans un plan perpendiculaire à l'axe du mandrin, comporte des retours prenant appui sur la face extérieure des tôles et est fixée sur celles-ci par soudage, cette bague étant traversée par la tête centrale et prenant appui contre un épaulement de celle-ci, pour assurer son maintien à l'intérieur du corps.

Avantageusement la tête centrale comporte, dans sa partie arrière dépassant du corps, un moletage destiné au montage d'une bague dite bague arrière ou bague de maintien comportant une partie tubulaire engagée et bloquée sur la tête centrale, une partie en forme d'anneau, perpendiculaire à l'axe du mandrin et une jupe parallèle à l'axe du mandrin, située à une distance de l'axe correspondant sensiblement à la distance maximale par rapport à ce même axe, des parties du corps comportant les gorges de guidage des mors.

En outre, le corps du mandrin est entouré d'une bague dite bague de serrage, pivotant avec le corps.

Afin d'assurer le verrouillage des mors en condition d'utilisation du mandrin, la tête centrale comporte, en avant du moletage destiné au montage de la bague arrière, une denture périphérique, et le corps porte un moyen de verrouillage qui est destiné à être engagé dans la denture de la tête, en position serrée du mandrin, et qui est actionnable par la bague de serrage qui possède un mouvement angulaire relatif par rapport au corps et au moyen de verrouillage, et fait passer celui-ci d'une position déverrouillée à une position verrouillée, au cours de ce mouvement angulaire.

Suivant une forme d'exécution, le moyen de verrouillage comprend une lame ressort montée fixe sur le corps et qui possède une extrémité libre normalement maintenue écartée de la denture du fait de son élasticité, lorsqu'elle est logée dans un évidement de la bague de serrage, et qui est en prise avec la denture de la tête, lorsqu'elle est en appui contre une rampe de la bague de serrage.

Afin de réaliser l'indexation de la bague de verrouillage respectivement en position verrouillée et en position déverrouillée du mandrin, la lame ressort comporte une seconde extrémité faisant saillie vers l'extérieur et destinée à venir s'engager dans l'une ou l'autre de deux cavités ménagées dans la face interne de la bague de serrage, permettant de maintenir la bague de serrage respectivement en position verrouillée et en position déverrouillée.

En outre, la bague de serrage comprend au moins un élément faisant saillie vers l'intérieur et destiné à prendre appui contre une des parties du corps comportant une gorge de guidage d'un mors pour entraîner le corps dans le sens du serrage, et au moins un élément faisant saillie vers l'intérieur et destiné à prendre appui contre une des parties du corps comportant une gorge de guidage d'un mors pour entraîner le corps dans le sens du desserrage.

Selon une possibilité la bague de serrage est maintenue en position axiale sur le corps par l'intermédiaire d'un jonc radial appartenant à la bague, venant en appui contre un épaulement de la partie avant du corps.

De toute façon l'invention sera bien comprise à l'aide de la description qui suit, en référence au dessin schématique annexé représentant, à titre d'exemple non limitatif, deux formes d'exécution de ce mandrin, équipé d'une tête centrale filetée coopérant avec une denture intérieure de chaque mors.
Figure 1 est une vue en perspective d'un premier mandrin ;
Figure 2 est une vue à plat d'une tôle plate à partir de laquelle est réalisé le mandrin ;
Figures 3 et 4 sont deux vues en perspective du corps de ce mandrin, respectivement de trois quart avant et de trois quart arrière ;
Figure 5 est une vue en élévation de la tête de la tête centrale du mandrin équipé de deux mors ;
Figure 6 est une vue en coupe longitudinale de ce mandrin équipé d'un foret ;
Figure 7 est une vue en coupe transversale de ce mandrin selon la ligne VII-VII de figure 6 ;
Figures 8 et 9 sont deux vues en coupe transversale de ce mandrin, respectivement en position de verrouillage et en position de déverrouillage.
Figure 10 est une vue en perspective éclatée d'un second mandrin ;
Figure 11 est une vue à plat de l'un des trois flans de tôle à partir desquels est réalisé le corps ;
Figure 12 est une vue en perspective éclatée de ce mandrin en cours de montage ;
Figure 13 en est une vue en coupe longitudinale en position montée ;
Figure 14 et 15 en sont deux vues en coupe tranversale, respectivement en position déverouillée et en position verrouillée.

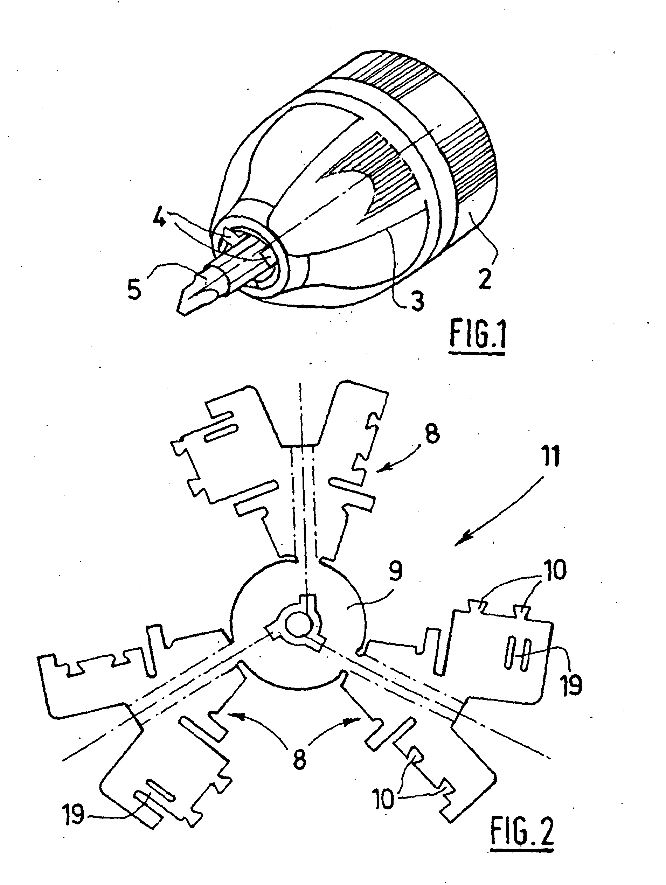

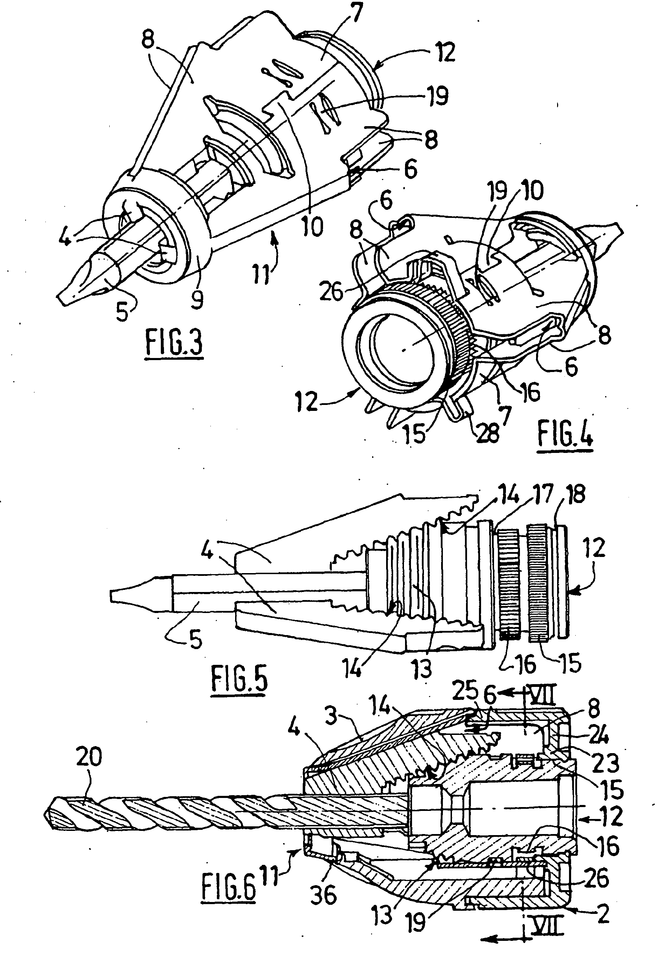

La figure 1 représente un premier mandrin dont la surface extérieure montre une bague arrière de maintien 2, une bague avant de serrage 3, trois mors 4 de section rectangulaire, serrant un outil 5 dont la queue est de section hexagonale et dont la partie active est constituée par exemple par un tournevis.

Suivant la caractéristique essentielle de ce mandrin, le corps 11 est réalisé à partir d'une tôle plate découpée, pliée et/ou emboutie, pour former des gorges 6 pour le guidage des mors, et refermée sur elle-même pour former un corps tubulaire délimitant une enveloppe cylindrique 7, pour le montage des mors et d'autres éléments, notamment des éléments d'entraînement des mors.

Dans le cas présent, la tôle plate est découpée pour présenter trois ailes 8 qui délimitent trois gorges 6 chacune pour le guidage d'un mors, ces trois ailes étant reliées par un anneau central 9, les ailes étant rabattues, après mise en forme, du même côté de l'anneau, et assemblées notamment par un système de profil en queue d'aronde 10, ainsi que par sertissage dans la partie arrière du corps 11. L'enveloppe cylindrique 7 délimitée par le corps sert au montage d'une tête centrale 12 présentant un filetage 13 destiné à engrener avec une denture 14 que comporte chaque mors sur sa face interieure. Comme montré au dessin, la tête centrale 12 présente un moletage arrière 15, une denture avant de verrouillage 16, une gorge 17 de fixation de la tête sur le corps, et une gorge 18 de fixation de la bague arrière de maintien 2. En pratique, le corps comporte des pattes 19 déformables vers l'intérieur pour s'engager dans la gorge 17 de la tête, afin d'assurer la retenue axiale de celle ci tout en permettant sa rotation.

Comme montré notamment à la figure 6, qui représente le mandrin en coupe longitudinale, équipé d'un outil constitué par un foret 20, la bague arrière de maintien 2 comprend une partie tubulaire 23 engagée sur le moletage 15 de la tête centrale 12, prolongée vers l'extérieur par une partie radiale 24 en forme d'anneau, elle-même prolongée par une jupe annulaire 25 située à une distance de l'axe correspondant sensiblement à la distance maximale par rapport à ce même axe, des parties du corps 11 comportant les gorges 6 de guidage des mors 4.

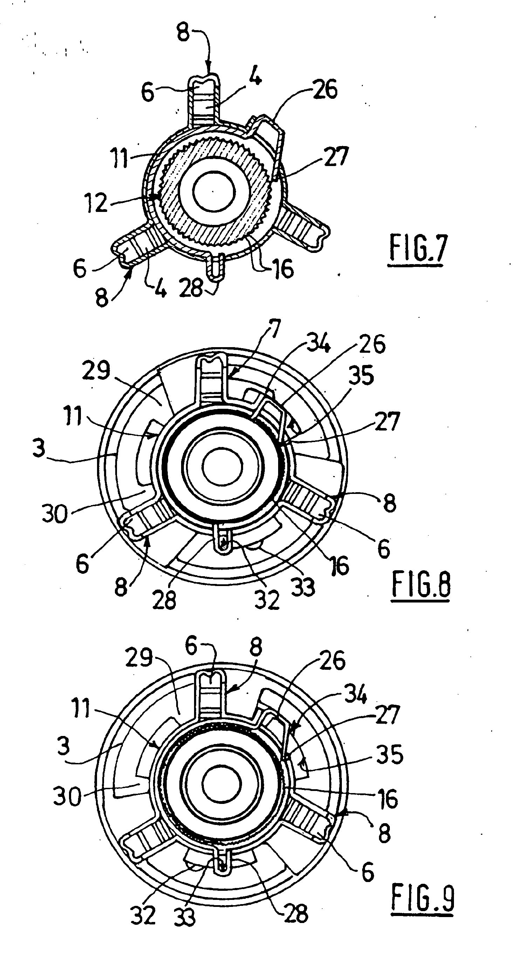

Comme montré notamment aux figures 6 à 9, le corps 11 est équipé, en regard de la denture de verrouillage 16 de la tête centrale 12, d'une lame ressort 26, montée fixe sur le corps, et comprenant une première extrémité libre 27 normalement maintenue écartée de la denture, du fait de son élasticité, comme montré à la figure 7, lorsqu'aucune contrainte n'est exercée sur elle. Elle peut au contraire venir en prise avec la denture 16, si une contrainte est exercée sur elle depuis l'extérieur.

L'autre extrémité de la lame ressort présente une boucle 28 tournée vers l'extérieur. La partie du corps équipée de la lame ressort 26 est entourée par la partie arrière de la bague de serrage 3. Cette bague de serrage comporte deux butées 29 et 30 destinées à venir prendre appui contre deux épaulements correspondant à deux parties en relief contenant les zones de guidage des mors, pour réaliser l'entraînement du corps dans un sens de rotation ou dans l'autre. De plus, la bague de serrage 3 comporte, sur sa face intérieure, deux cavités 32 et 33 destinées à recevoir l'extrémité 28 de la lame de ressort, pour réaliser l'indexage de deux positions, respectivement la position de verrouillage et la position de déverrouillage.

En outre, la bague 3 comporte, sur sa face intérieure, un évidement 34 prolongé par une rampe 35 de plus faible diamètre, l'évidement 34 et la rampe 35 étant destinés à coopérer avec l'extrémite 27 de la lame ressort 26, pour maintenir l'extrémité 27 en prise avec la denture 16, lorsque l'extrémité de la lame est en appui contre la rampe 35, comme montré à la figure 8, ou pour permettre le dégagement de cette extrémité 27 vis-à-vis de la denture, lorsque l'extrémité de la lame est logée dans l'évidement 34, comme montré à la figure 9.

Enfin, la bague de serrage est maintenue en position sur le corps 11 par l'intermédiaire d'un jonc radial 36, venant en appui contre un épaulement de la partie avant du corps.

D'un point de vue pratique, l'utilisation de ce mandrin est réalisée de façon traditionnelle, l'opérateur tenant la bague arrière de maintien 2 et réalisant le rapprochement des mors 4 en actionnant la bague de serrage 3. En fin de mouvement de serrage, le verrouillage du mandrin est réalisé dans le même mouvement, par engagement de l'extrémité 27 de la lame de ressort 26 dans la denture de verrouillage 16. Le desserrage du mandrin est réalisé en procédant de façon inverse.

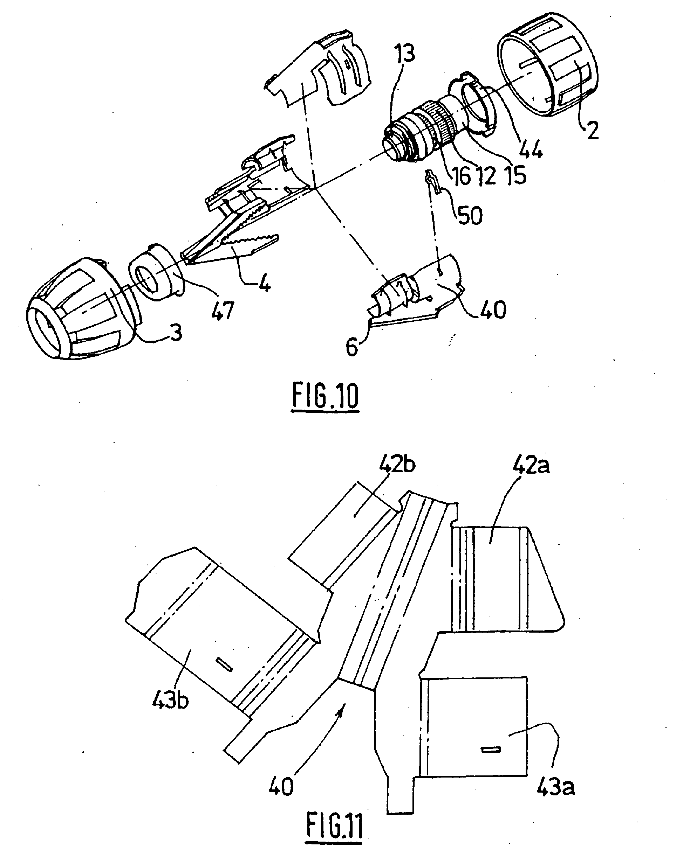

Les figures 10 à 15 représentent une seconde forme d'exécution de ce mandrin dans lequel les mêmes éléments sont désignés par les mêmes références que précédemment.

La particularité de ce second mandrin réside dans le fait que le corps 11 n'est pas réalisé à partir d'une seule tôle, mais à partir de trois pièces en tôle assemblées les unes aux autres.

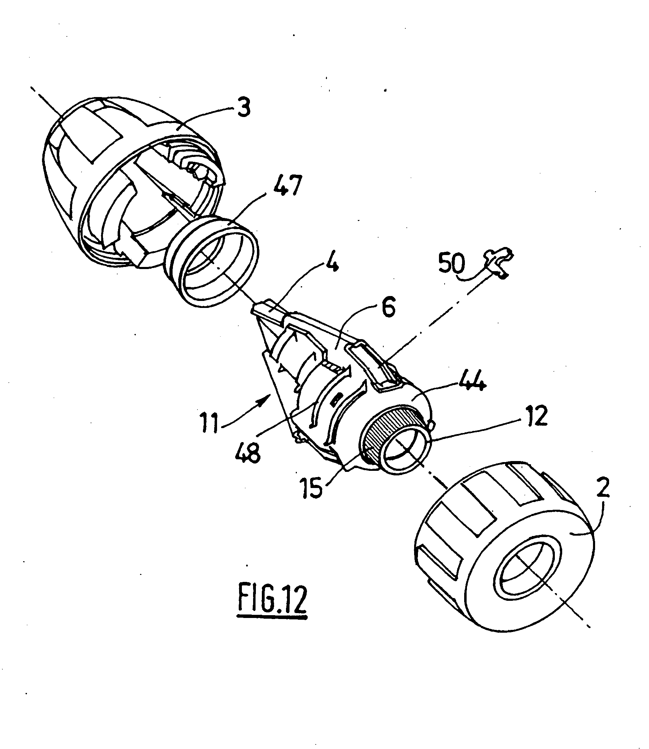

Chacune de ces pièces en tôle est désignée par la référence 40. Chaque pièce en tôle est réalisée, comme cela est montré à la figure 11, à partir d'un flan de tôle plane, qui est obtenu par découpage, qui est ensuite plié et/ou embouti, pour former une gorge 6 pour le guidage d'un mors 4. Comme cela ressort de la figure 11, chaque tôle comporte une partie centrale dans laquelle est destinée à être ménagée une gorge 6 de guidage d'un mors, à partir de laquelle s'étendent deux ailes avant 42a, 42b et deux ailes arrières 43a, 43b. L'aile avant 42a est plus large que l'aile 42b, et l'aile arrière 43b est plus large que l'aile arrière 43a. Les ailes 42a et 43b viennent recouvrir partiellement les ailes adjacentes des deux toiles voisines et prendre appui contre une partie de chacune de ces tôles assurant la formation d'une gorge 6. Les ailes 42b et 43a sont, pour leur part, partiellement recouvertes par les ailes 42a et 43b des deux tôles adjacentes.

Cet agencement permet de bénéficier d'une bonne rigidité. Les différentes pièces 40 sont assemblées les unes aux autres par soudage.

En pratique, après assemblage des trois pièces 40 constitutives du corps, les mors 4 et la tête centrale 12 sont introduits à l'intérieur du corps. La partie arrière du corps est alors fermée par une bague 44 laissant passer la tête centrale, et venant prendre appui contre un épaulement 45 de celle-ci. La bague 44 possède des retours 46 venant prendre appui sur la face extérieure du corps. La bague 44 est fixée sur le corps 11 par soudure par points.

La bague avant de serrage 3 est équipée d'un nez métallique 47, qui est engagé de l'arrière vers l'avant, dans celle-ci, avant montage de la bague sur la partie avant du corps 11. La bague avant de serrage 3 est maintenue bloquée sur le corps 11, par coopération d'une nervure 48 ménagée sur le corps, tranversalement à l'axe, et d'un jonc radial 49 ménagé sur la face intérieure de la bague.

Comme dans la forme d'exécution précédente, ce mandrin est équipé d'un élément de verrouillage 50, destiné à coopérer avec la denture de verrouillage du corps.

Comme dans la forme d'exécution précédente, la bague de serrage avant comporte au moins deux butées 29, 30 destinées à venir prendre appui sur les faces extérieures du corps correspondant à deux parties de guidage des mors, pour entraîner le corps en rotation dans un sens ou dans l'autre.

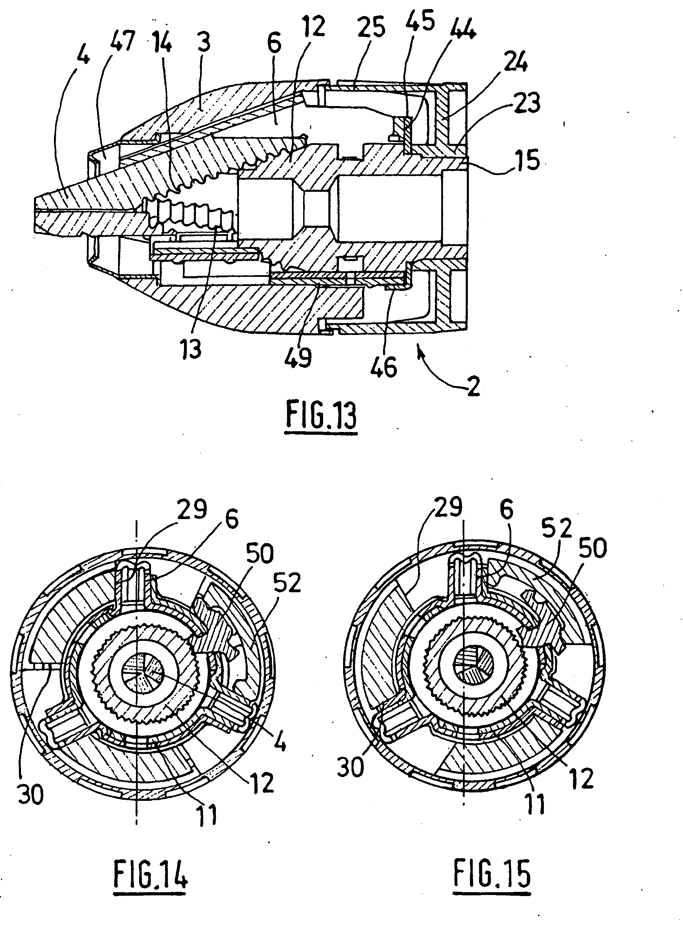

Comme dans la forme d'exécution précédente, la paroi intérieure de la bague comporte une partie 52, destinée à actionner l'élément de verrouillage 50 pour faire passer celui-ci dans une position non verrouillée, comme montré à la figure 14, ou maintenir celui-ci en position verrouillée, comme montré à la figure 15.

Il va de soi que le dispositif de verrouillage décrit en référence à la première forme d'exécution pourrait également être mis en oeuvre dans le mandrin correspondant à la seconde forme d'exécution.

Comme il va de soi, l'invention ne se limite pas aux seules formes d'exécution de ce mandrin, décrites ci-dessus à titre d'exemples, elle en embrasse au contraire toutes les variantes dans le cadre des revendications. C'est ainsi notamment que ce mandrin pourrait ne pas comporter une tête centrale filetée 12, mais être équipé d'un écrou qui entoure les mors, et qui entraîne des parties de ceux-ci filetées extérieurement, sans que l'on sorte pour autant du cadre de l'invention.

## Revendications

1. Mandrin porte-outil pour l'équipement d'une machine tournante, du type comportant un corps à l'intérieur duquel sont montés, guidés en translation, plusieurs mors qui convergent vers l'avant pour réaliser le serrage d'un outil, **caractérisé en ce que** le corps (11) est réalisé à partir d'au moins une tôle plate découpée, pliée et/ou emboutie pour former des gorges (6) tournées vers l'intérieur, pour le guidage des mors (4), et refermée sur elle-même pour former un corps tubulaire servant au montage des mors (4) et d'autres éléments, notamment (12) d'entraînement des mors.

2. Mandrin selon la revendication 1, destiné au montage de trois mors, **caractérisé en ce qu**'il est réalisé à partir d'une pièce obtenue par découpage d'une tôle plate et comportant un anneau central (9) destiné à former l'extrémité avant du mandrin, à partir duquel s'étendent trois ailes (8) dans chacune desquelles est réalisée par pliage ou emboutissage une gorge (6) orientée vers le centre de l'anneau et servant au guidage d'un mors (4), les ailes étant rabattues d'un même côté de l'anneau et fixées chacune sur les deux autres ailes, pour former un corps tubulaire.

3. Mandrin selon l'une des revendications 1 et 2, **caractérisé en ce que** la fixation de chaque aile (8) sur une aile voisine est réalisée par sertissage (10) dans la partie arrière du corps (11).

4. Mandrin selon la revendication 1, destiné au montage des trois mors, **caractérisé en ce que** le corps est réalisé à partir de trois tôles plates (40) découpées, pliées et/ou embouties, délimitant chacune une gorge pour le guidage d'un mors (4), et soudées les unes sur les autres pour former un corps tubulaire (11) servant au montage des mors et d'autres éléments, notamment d'entraînement des mors.

5. Mandrin selon la revendication 4, **caractérisé en ce que** les trois tôles mises en forme se recouvrent partiellement deux à deux et chaque tôle comporte deux ailes avant (42a, 42b) et deux ailes arrières (43a, 43b) de largeurs différentes disposées de part et d'autre d'une partie centrale dans laquelle est destinée à être ménagée une gorge (6), l'aile avant (42a) la plus large et l'aile arrière (43b) la plus large étant situées de part et d'autre de la partie centrale, chacune de ces deux ailes avant et arrières (42a, 43b) étant destinée à venir en recouvrement des ailes avant (42b) et arrière (43a) des deux tôles situées de part et d'autre de la tôle considérée, tandis que les deux ailes les moins larges (42b, 43a) de cette tôle sont au moins pour partie recouvertes par les ailes (42a) et (43b) des deux tôles adjacentes.

6. Mandrin selon la revendication 5, **caractérisé en ce que** les ailes plus larges avant et arrières (42a, 43b) d'une même tôle (40) sont décalées latéralement l'une par rapport à l'autre, de telle sorte que l'aile arrière (43b) d'une tôle vienne en appui contre la paroi extérieure d'une gorge (6) formée par une tôle voisine et que l'aile avant (42a) de la tôle vienne en appui contre la paroi extérieure d'une gorge formée par l'autre tôle voisine.

7. Mandrin selon l'une des revendications 1 à 6, comportant une tête centrale filetée (12) coopérant avec une denture intérieure (14) de chacun des mors (4), **caractérisé en ce que** les zones du corps comprises entre les gorges de guidage des mors, délimitent une enveloppe cylindrique (7) servant au logement de la tête centrale (12).

8. Mandrin selon la revendication 7, **caractérisé en ce que** la tête centrale comporte une gorge annulaire (17) et le corps (11) comporte au moins une patte (19), déformable vers l'intérieur, pour s'engager dans la gorge de la tête, afin d'assurer la retenue axiale de celle-ci, tout en permettant sa rotation.

9. Mandrin selon la revendication 7, **caractérisé en ce que** l'extrémité postérieure du corps (11) est équipée d'une bague de fermeture métallique (44) qui, disposée dans un plan perpendiculaire à l'axe du mandrin, comporte des retours (46) prenant appui sur la face extérieure des tôles (40), et est fixée sur celles-ci par soudage, cette bague (44) étant traversée par la tête centrale (12) et prenant appui contre un épaulement (45) de celle-ci, pour assurer son maintien à l'intérieur du corps.

10. Mandrin selon l'une des revendications 7 à 9, **caractérisé en ce que** la tête centrale (12) comporte, dans sa partie arrière dépassant du corps, un moletage (15) destiné au montage d'une bague dite bague arrière (2) ou bague de maintien comportant une partie tubulaire (23) engagée et bloquée sur la tête centrale (12), une partie (24) en forme d'anneau, perpendiculaire à l'axe du mandrin et une jupe (25) parallèle à l'axe du mandrin située à une distance de l'axe correspondant sensiblement à la distance maximale par rapport à ce même axe, des parties du corps (6) comportant les gorges de guidage des mors (4).

11. Mandrin selon l'une des revendications 7 à 10, **caractérisé en ce que** le corps (11) du mandrin est entouré d'une bague (3) dite bague de serrage, pivotant avec le corps.

12. Mandrin selon les revendications 10 et 11, **caractérisé en ce que** la tête centrale (12) comporte, en avant du moletage (15) destiné au montage de la bague arrière (2), une denture périphérique (16) et le corps porte un moyen de verrouillage (26) qui est destiné à être engagé dans la denture (16) de la tête, en position serrée du mandrin, et qui est actionnable par la bague de serrage (3) qui possède un mouvement angulaire relatif par rapport au corps et au moyen de verrouillage, et fait passer celui-ci d'une position déverrouillée à une position verrouillée, au cours de ce mouvement angulaire.

13. Mandrin selon la revendication 12, **caractérisé en ce que** le moyen de verrouillage comprend une lame ressort (26) montée fixe sur le corps (11) et qui possède une extrémité libre (27) normalement maintenue écartée de la denture (26) du fait de son élasticité, lorsqu'elle est logée dans un évidement (34) de la bague de serrage (3), et qui est en prise avec la denture de la tête, lorsqu'elle est en appui contre une rampe (35) de la bague de serrage (3).

14. Mandrin selon la revendication 13, **caractérisé en ce que** la lame ressort (26) comporte une seconde extrémite (28) faisant saillie vers l'extérieur et destinée à venir s'engager dans l'une ou l'autre de deux cavités (32, 33) ménagées dans la face interne de la bague de serrage (3), permettant de maintenir la bague de serrage respectivement en position verrouillée et en position déverrouillée.

15. Mandrin selon l'une des revendications 11 à 14, **caractérisé en ce que** la bague de serrage (3) comprend au moins un élément (30) faisant saillie vers l'intérieur et destiné à prendre appui contre une des parties du corps comportant une gorge de guidage (6) d'un mors (4) pour entraîner le corps dans le sens du serrage, et au moins un élément (29) faisant saillie vers l'intérieur et destiné à prendre appui contre une des parties du corps comportant une gorge de guidage (6) d'un mors (4) pour entraîner le corps dans le sens du desserrage.

16. Mandrin selon l'une des revendications 11 à 15, **caractérisé en ce que** la bague de serrage (3) est maintenue en position axiale sur le corps (11) par l'intermédiaire d'un jonc radial (36) appartenant à la bague, venant en appui contre un épaulement de la partie avant du corps (11).

## Claims

1. Tool chuck for a rotary machine, of the type comprising a body inside which there are mounted, guided in translational movement, several jaws which converge forward to clamp a tool, **characterized in that** the body (11) is made from at least one flat sheet that is cut, folded and/or pressed to form inwardly-facing grooves (6) for guiding the jaws (4), and closed up on itself to form a tubular body that serves to mount the jaws (4) and other elements, particularly elements (12) for driving the jaws.

2. Chuck according to Claim 1, intended for mounting three jaws, **characterized in that** it is made from a part obtained by cutting a flat sheet and comprising a central annulus (9) intended to form the front end of the chuck, from which annulus there extend three wings (8) in each of which a groove (6) directed towards the centre of the annulus and used to guide one jaw (4) is produced by bending or pressing, the wings being folded over on one and the same side of the annulus and each fixed to the other two wings in order to form a tubular body.

3. Chuck according to one of Claims 1 and 2, **characterized in that** each wing (8) is attached to an adjacent wing by crimping (10) in the rear part of the body (11).

4. Chuck according to Claim 1, intended for mounting three jaws, **characterized in that** the body is made from three flat sheets (40) which are cut, folded and/or pressed, each one delimiting a groove for guiding a jaw (4) and which are welded together to form a tubular body (11) used to mount the jaws and other elements, particularly elements for driving the jaws.

5. Chuck according to Claim 4, **characterized in that** the three shaped sheets partially overlap one another pairwise, and each sheet has two front wings (42a, 42b) and two rear wings (43a, 43b) of different widths positioned one on each side of a central part in which a groove (6) is intended to be formed, the widest front wing (42a) and the widest rear wing (43b) being situated one on each side of the central part, each of these two front and rear wings (42a, 43b) being intended to overlap the front (42b) and rear (43a) wings of the two sheets positioned one on each side of the sheet in question, while the two narrowest wings (42b, 43a) of this sheet are at least partially overlapped by the wings (42a) and (43b) of the two adjacent sheets.

6. Chuck according to Claim 5, **characterized in that** the widest front and rear wings (42a, 43b) of one and the same sheet (40) are laterally offset from one another in such a way that the rear wing (43b) of one sheet bears against the exterior wall of a groove (6) formed by an adjacent sheet and such that the front wing (42a) of the sheet bears against the exterior wall of a groove formed by the other adjacent sheet.

7. Chuck according to one of Claims 1 to 6, comprising a threaded central head (12) collaborating with an internal toothset (14) of each of the jaws (4), **characterized in that** the regions of the body which lie between the jaw guide grooves delimit a cylindrical envelope (7) which serves to house the central head (12) .

8. Chuck according to Claim 7, **characterized in that** the central head has an annular groove (17) and the body (11) has at least one inwardly deformable tab (19) to engage in the groove in the head so as to retain the latter axially while at the same time allowing it to turn.

9. Chuck according to Claim 7, **characterized in that** the posterior end of the body (11) is equipped with a metal closure ring (44) which, positioned in a plane perpendicular to the axis of the chuck, has returns (46) bearing against the exterior face of the sheets (40) and is fixed to the latter by welding, this ring (44) having the central head (12) passing through it and bearing against a shoulder (45) of this head in order to hold it inside the body.

10. Chuck according to one of Claims 7 to 9, **characterized in that** the central head (12) comprises, in its rear part protruding from the body, knurling (15) intended for the mounting of a so-called rear ring (2) or retaining ring comprising a tubular part (23) fitted and immobilized on the central head (12), an annulus-shaped part (24), perpendicular to the axis of the chuck and a skirt (25) parallel to the axis of the chuck located some distance from the axis that corresponds more or less to the maximum distance from this same axis of those parts of the body (6) that have the grooves for guiding the jaws (4).

11. Chuck according to one of Claims 7 to 10, **characterized in that** the body (11) of the chuck is surrounded by a ring (3) termed the clamping ring, which pivots with the body.

12. Chuck according to Claims 10 and 11, **characterized in that** the central head (12) has, in front of the knurling (15) intended for mounting the rear ring (2), a peripheral toothset (16) and the body bears a locking means (26) which is intended to be engaged in the toothset (16) of the head, when the chuck is in the clamped position, and which can be operated by the clamping ring (3) which has a relative angular movement with respect to the body and with respect to the locking means and causes the latter to move from an unlocked position into a locked position during this angular movement.

13. Chuck according to Claim 12, **characterized in that** the locking means comprises a leaf spring (26) mounted fixedly on the body (11) and which has a free end (27) normally kept away from the toothset (26) on account of its elasticity, when housed in a recess (34) of the clamping ring (3), and which engages with the toothset of the head when it bears against a ramp (35) of the clamping ring (3).

14. Chuck according to Claim 13, **characterized in that** the leaf spring (26) has a second end (28) projecting outwards and intended to engage in one or other of two cavities (32, 33) formed in the internal face of the clamping ring (3) to allow the clamping ring to be kept either in the locked position or in the unlocked position, respectively.

15. Chuck according to one of Claims 11 to 14, **characterized in that** the clamping ring (3) comprises at least one inwardly-projecting element (30) intended to bear against one of the parts of the body comprising a guide groove (6) for guiding a jaw (4) for driving the body in the clamping direction, and at least one inwardly-projecting element (29) intended to bear against one of the parts of the body comprising a guide groove (6) for guiding a jaw (4) for driving the body in the unclamping direction.

16. Chuck according to one of Claims 11 to 15, **characterized in that** the clamping ring (3) is held in the axial position on the body (11) by a radial bead (36) belonging to the ring bearing against a shoulder of the front part of the body (11).

## Patentansprüche

1. Werkzeugspannfutter für eine drehende Maschine, vom Typ enthaltend einen Körper, in dessen Innern in ihrer Verschiebung geführt mehrere Spannbacken montiert sind, die nach vorne konvergieren, um das Festspannen eines Werkzeugs zu bewirken, **dadurch gekennzeichnet, dass** der Körper (11) ausgehend von zumindest einem flachen Blech hergestellt ist, das zugeschnitten, gebogen und/oder tiefgezogen ist, um nach innen gerichtete Nuten (6) für die Führung der Spannbacken (4) zu bilden, und auf sich selbst geschlossen ist, um einen röhrenförmigen Körper zu bilden, der zur Montage der Spannbacken (4) und weiterer Elemente, insbesondere (12) zur Mitnahme der Spannbacken, dient.

2. Spannfutter nach Anspruch 1, für die Montage von drei Spannbacken, **dadurch gekennzeichnet, dass** es ausgehend von einem Teil hergestellt ist, das durch Zuschneiden eines flachen Blechs erhalten ist und einen mittigen Ring (9) aufweist, der für die Bildung des vorderen Ende des Spannfutters vorgesehen ist, ausgehend von dem sich drei Flügel (8) erstrecken, in denen durch Biegen oder Tiefziehen jeweils eine Nut (6) ausgebildet ist, die in Richtung der Mitte des Rings gerichtet ist und zur Führung einer Spannbacke (4) dient, wobei die Flügel auf ein und derselben Seite des Rings umgebogen sind und jeweils an den beiden anderen Flügeln befestigt sind, um einen röhrenförmigen Körper zu bilden.

3. Spannfutter nach einem der Ansprüche 1 und 2, **dadurch gekennzeichnet, dass** die Befestigung jedes Flügels (8) an einem benachbarten Flügel durch Quetschen (10) in dem hinteren Teil des Körpers (11) ausgeführt ist.

4. Spannfutter nach Anspruch 1, für die Montage von drei Spannbacken, **dadurch gekennzeichnet, dass** der Körper ausgehend von drei flachen Blechen (40) hergestellt ist, die zugeschnitten, gebogen und/oder tiefgezogen sind, wobei sie jeweils eine Nut für die Führung einer Spannbacke (4) bilden, und miteinander verschweißt sind, um einen röhrenförmigen Körper (11) zu bilden, der zur Montage der Spannbacken und weiterer Elemente, insbesondere zur Mitnahme der Spannbacken, dient.

5. Spannfutter nach Anspruch 4, **dadurch gekennzeichnet, dass** die drei geformten Bleche sich jeweils paarweise bedecken und jedes Blech zwei vordere Flügel (42a, 42b) und zwei hintere Flügel (43a, 43b) mit unterschiedlichen Breiten aufweist, die beiderseits eines mittigen Teils angeordnet sind, in dem eine Nut (6) ausgebildet werden soll, wobei sich der breiteste vordere Flügel (42a) und der breiteste hintere Flügel (43b) beiderseits des mittigen Teils befinden, wobei jeder dieser beiden Flügel, der vordere und hintere (42a, 43b), dafür vorgesehen ist, zur Deckung des vorderen Flügels (42b) und des hinteren Flügels (43a) der beiden Bleche zu kommen, die beiderseits des betreffenden Blechs angeordnet sind, während die beiden schmalsten Flügel (42b, 43a) dieses Blechs zumindest teilweise von den Flügeln (42a) und (43b) der beiden angrenzenden Bleche bedeckt sind.

6. Spannfutter nach Anspruch 5, **dadurch gekennzeichnet, dass** der breiteste vordere und hintere Flügel (42a, 43b) ein und desselben Blechs (40) seitlich zueinander versetzt sind, derart, dass der hintere Flügel (43b) eines Blechs zum Aufliegen gegen die äußere Wand einer Nut (6) kommt, die von einem benachbarten Blech gebildet ist, und dass der vordere Flügel (42a) des Blechs zum Anliegen gegen die äußere Wand einer Nut kommt, die von dem anderen benachbarten Blech gebildet ist.

7. Spannfutter nach einem der Ansprüche 1 bis 6 mit einem mittigen Gewindekopf (12), der mit einer inneren Zahnung (14) jeder der Spannbacken (4) zusammenwirkt, **dadurch gekennzeichnet, dass** die Bereiche des Körpers zwischen den Nuten zur Führung der Spannbacken eine zylindrische Hülle (7) bilden, die als Aufnahme für den mittigen Kopf (12) dient.

8. Spannfutter nach Anspruch 7, **dadurch gekennzeichnet, dass** der mittige Kopf eine ringförmige Nut (17) aufweist und dass der Körper (11) zumindest eine nach innen verformbare Klaue (19) aufweist, um in die Nut des Kopfes einzugreifen, um einerseits zwar dessen axialen Rückhalt zu bewirken, andererseits jedoch dessen Drehung zu gestatten.

9. Spannfutter nach Anspruch 7, **dadurch gekennzeichnet, dass** das hintere Ende des Körpers (11) mit einem metallischen Schließring (44) versehen ist, der, in einer zu der Achse des Spannfutters senkrechten Ebene angeordnet, Rücksprünge (46) aufweist, die zum Aufliegen auf der äußeren Fläche der Bleche (40) kommen, und der an diesen festgeschweißt ist, wobei dieser Ring (44) von dem mittigen Kopf (12) durchsetzt ist und gegen einen Absatz (45) dieses letzten zum Anliegen kommt, um dessen Halt im Innern des Körpers zu bewirken.

10. Spannfutter nach einem der Ansprüche 7 bis 9, **dadurch gekennzeichnet, dass** der mittige Kopf (12) in seinem hinteren Teil, der über den Körper hinausragt, eine Rändelung (15) aufweist, die für die Montage eines Rings, eines sogenannten hinteren Rings (2) oder Halterings, vorgesehen ist, der einen röhrenförmigen Abschnitt (23), der auf den mittigen Kopf (12) aufgesteckt und gesperrt ist, einen Abschnitt (24) in Form eines Rings, der senkrecht zu der Achse des Spannfutters ist, und eine Schürze (25) aufweist, die sich parallel zu der Achse des Spannfutters um einen Abstand entfernt befindet, der im Wesentlichen dem maximalen Abstand relativ zu derselben Achse entspricht, wobei Teile des Körpers (6) die Nuten zur Führung der Spannbacken (4) aufweisen.

11. Spannfutter nach einem der Ansprüche 7 bis 10, **dadurch gekennzeichnet, dass** der Körper (11) des Spannfutters von einem Ring (3), einem sogenannten Spannring, umgeben ist, der mit dem Körper drehbar ist.

12. Spannfutter nach den Ansprüchen 10 und 11 **dadurch gekennzeichnet, dass** der mittige Kopf (12) vor der Rändelung (15), die für die Montage des hinteren Rings (2) vorgesehen ist, eine umlaufende Zahnung (16) aufweist und der Körper ein Verriegelungsmittel (26) trägt, das dafür vorgesehen ist, in der gespannten Position des Spannfutters in die Zahnung (16) des Kopfes einzutreten, und das über den Spannring (3) betätigbar ist, der eine relative Winkelbewegung relativ zu dem Körper und dem Verriegelungsmittel aufweist, und bewirkt, dass dieses letzte im Laufe dieser Winkelbewegung von einer entriegelten Stellung in eine verriegelte Stellung übergeht.

13. Spannfutter nach Anspruch 12, **dadurch gekennzeichnet, dass** das Verriegelungsmittel eine Federzunge (26) enthält, die an dem Körper (11) fest montiert ist und ein freies Ende (27) aufweist, das normalerweise aufgrund seiner Elastizität von der Zahnung (26) auf Abstand gehalten wird, wenn es sich in einer Ausnehmung (34) des Spannrings (3) befindet, und das in Eingriff mit der Zahnung des Kopfes ist, wenn es gegen eine Rampe (35) des Spannrings (3) anliegt.

14. Spannfutter nach Anspruch 13, **dadurch gekennzeichnet, dass** die Federzunge (26) ein zweites Ende (28) aufweist, das nach außen vorspringt und dafür vorgesehen ist, in den einen oder anderen von zwei Hohlräumen (32, 33) einzutreten, die an der inneren Fläche des Spannrings (3) vorgesehen sind, der den Halt des Spannrings in verriegelter Stellung bzw. entriegelter Stellung ermöglicht.

15. Spannfutter nach einem der Ansprüche 11 bis 14, **dadurch gekennzeichnet, dass** der Spannring (3) zumindest ein Element (30) enthält, das nach innen vorspringt und dafür vorgesehen ist, gegen einen der Teile des Körpers zum Anliegen zu kommen, der eine Nut (6) zur Führung einer Spannbacke (4) aufweist, um den Körper in die Spannrichtung mitzunehmen, und zumindest ein Element (29), das nach innen vorspringt und dafür vorgesehen ist, gegen einen der Teile des Körpers zum Anliegen zu kommen, der eine Nut (6) zur Führung einer Spannbacke (4) aufweist, um den Körper in die Lösrichtung mitzunehmen.

16. Spannfutter nach einem der Ansprüche 11 bis 15, **dadurch gekennzeichnet, dass** der Spannring (3) an dem Körper (11) in axialer Richtung gehalten wird mittels eines radialen Stabs (36), der dem Ring zugehörig ist, der gegen einen Absatz des vorderen Teils des Körpers (11) zum Anliegen kommt.
